# DEMANDE DE BREVET EUROPEEN

(11) **EP 2 266 867 A1**
(43) Date de publication de la demande: **29.12.2010**
(21) Numéro de dépôt: 10305673.5
(22) Date de dépôt: 23.06.2010
(51) Int. Cl.: B62D 35/00, F15D 1/12

(54) **Elément de carrosserie de véhicule automobile avec soufflage d'air**

(30) Priorité: 23.06.2009 FR 0954276
(71) Demandeur: Renault S.A.S., 92100 Boulogne-Billancourt (FR)
(72) Inventeur: Bernasconi, Jérémy, 75015, PARIS (FR); Brelaud, Olivier, 78650, SAULX-MARCHAIS (FR); Cabrie, Dominique, 78000, VERSAILLES (FR); Labrevois, Philippe, 27810, MARCILLY SUR EURE (FR)

(57) **Abrégé**

Elément de carrosserie de véhicule automobile comportant un caisson (11) avec une partie de paroi pleine entourant une zone de soufflage d'air (13) qui présente une ligne d'orifices de soufflage communiquant avec des actionneurs de jets d'air synthétique, lesdits actionneurs (4) comprenant une cavité munie d'un desdits orifices et présentant au moins une membrane (7) qui peut être soumise à des vibrations. L'élément de carrosserie comprend un boîtier d'actionneurs mobile (15) à l'intérieur duquel sont logés les actionneurs (4) et des moyens de déplacement capables de déplacer le boîtier (15) entre une position active dans laquelle les orifices (6) des actionneurs (4) sont en regard de la zone de soufflage (13) et une position inactive dans laquelle les orifices (6) des actionneurs (4) sont en dehors de la zone de soufflage (13).

## Description

La présente invention est relative d'une manière générale à l'amélioration de la traînée d'un véhicule automobile par l'expulsion de jets d'air synthétisé à certains endroits de la carrosserie du véhicule.

On parle de jets d'air synthétique pour différencier cet air de celui qui résulte du déplacement du véhicule.

Une amélioration de l'aérodynamique d'un véhicule peut en effet être obtenue en prévoyant des jets d'air synthétique à la surface de la carrosserie du véhicule. Chaque jet d'air résultant de cycles de soufflage et d'aspiration alternés en sortie d'orifice, est créé par une cavité dans laquelle un actionneur électrique fait vibrer une ou plusieurs membranes. On peut utiliser divers moyens pour agir sur la membrane, par exemple des moyens électrodynamiques du type haut-parleur, ou des moyens mécaniques du type piston mobile. On peut également utiliser des membranes piézoélectriques ou des polymères électro-actifs ou encore des matériaux à mémoire de forme.

En pratique, on utilise une pluralité d'actionneurs de jets d'air synthétique, positionnés sur un élément de carrosserie extérieur du véhicule sur une ou plusieurs lignes, par exemple à l'extrémité du pavillon et/ou de la malle de coffre, sur les custodes, sur les montants des baies ouvrantes, etc...

La demande de brevet européen 1 544 089 (CRF) décrit l'utilisation de tels actionneurs à membrane vibrante montée en différents endroits de la carrosserie d'un véhicule automobile. Des exemples de fonctionnement d'actionneurs sont indiqués, par exemple des actionneurs piézoélectriques ou sous forme de « MEMS » capables de faire varier de façon cyclique le volume d'une chambre de façon à générer un jet d'air projeté à l'extérieur de la carrosserie par un orifice.

La demande de brevet français 2 859 160 (Renault) décrit un procédé de contrôle de l'écoulement d'air autour d'un véhicule automobile dans le but en particulier de retarder le décollement de la couche limite, afin de réduire la traînée aérodynamique du véhicule. Un dispositif à piston mobile est capable de projeter un jet d'air à l'extérieur par un orifice.

La demande de brevet français 2 912 977 (Renault) décrit un rétroviseur de véhicule automobile à visibilité améliorée par soufflage d'air, par exemple au moyen d'une cavité à volume variable munie d'une membrane vibrante.

La demande de brevet français 2 915 169 (Renault) décrit un actionneur de jet d'air synthétique destiné à être intégré dans un élément de carrosserie d'un véhicule automobile, dans lequel la membrane vibrante, soumise à l'action d'une tension électrique, sert à la fois d'actionneur et de capteur.

Le montage de tels actionneurs de jets d'air synthétique intégrés dans un élément de carrosserie de véhicule automobile, pose cependant un certain nombre de problèmes qui n'ont pas été jusqu'à ce jour résolus. En effet, le fait de prévoir des cavités ouvertes à l'extérieur par des orifices ou des fentes de petites dimensions pour la projection de jets d'air synthétique, entraîne des risques d'entrée de saletés, de poussières et de pénétration d'eau de pluie ou d'humidité lors du lavage du véhicule. Il en résulte des risques sérieux d'endommagement des actionneurs.

La présente invention a pour objet de résoudre ces difficultés et de proposer des moyens simples et pratiques pour protéger le système d'actionneurs de jets d'air synthétique lorsque celui-ci n'est pas en fonctionnement, par exemple à l'arrêt du véhicule, à basse vitesse ou lors d'intempéries importantes ou du lavage du véhicule.

Dans un mode de réalisation, un élément de carrosserie de véhicule automobile comporte un caisson avec une partie de paroi pleine entourant une zone de soufflage d'air qui présente une ligne d'orifices de soufflage communiquant avec des actionneurs de jets d'air synthétique. Les actionneurs comprennent une cavité munie d'un desdits orifices et présentant au moins une membrane qui peut être soumise à des vibrations.

L'élément de carrosserie comprend un boîtier d'actionneurs mobile à l'intérieur duquel sont logés les actionneurs et des moyens de déplacement capables de déplacer le boîtier entre une position active dans laquelle les orifices des actionneurs sont en regard de la zone de soufflage et une position inactive dans laquelle les orifices des actionneurs sont en dehors de la zone de soufflage.

Les moyens de soufflage d'air peuvent ainsi être escamotés de façon simple lorsqu'ils ne sont pas en fonctionnement, par exemple lorsque le véhicule est à l'arrêt ou se déplace à faible vitesse ou encore en cas de fortes pluies ou pendant le lavage du véhicule.

Les actionneurs peuvent comporter une ou plusieurs membranes mises en oscillation par des moyens électrodynamiques du type utilisés dans les hauts parleurs, par un piston vibrant ou par des moyens piézoélectriques. Les membranes peuvent être réalisées en matériaux polymères électro-actifs ou en matériaux à mémoire de forme.

L'ensemble des actionneurs correspondant à la ligne d'orifices de soufflage sont de préférence montés dans le boîtier d'actionneurs. Si plusieurs lignes d'orifices de soufflage sont prévues, l'élément de carrosserie pourra comporter plusieurs boîtiers d'actionneurs correspondant chacun à l'une des lignes d'orifices de soufflage.

Les actionneurs de jets d'air synthétique sont généralement des actionneurs dynamiques, c'est-à-dire que leurs performances sont liées d'une part à la géométrie du véhicule, et d'autre part aux conditions de roulage. En d'autres termes, il est possible de commander l'actionneur de jets synthétiques en fonction de la vitesse de roulage du véhicule, et/ou de l'angle du volant de direction. Il est également possible de tenir compte de l'existence éventuelle de vent latéral.

Les orifices par lesquels le jet d'air est expulsé peuvent être de forme circulaire, oblongs, rectangulaires ou présenter d'autres formes. Lorsque les orifices se présentent sous la forme de fentes, celles-ci sont de petites dimensions, avec une largeur de l'ordre du millimètre et une longueur de l'ordre du centimètre. Il est également possible d'utiliser des actionneurs de type microscopique utilisant une technologie MEMS dont les dimensions sont alors divisées par un facteur au moins égal à 10.

Afin d'assurer l'étanchéité à l'endroit de la ligne d'orifices de soufflage, un joint d'étanchéité peut avantageusement être prévu sur le pourtour de la zone de soufflage, ledit joint étant en contact avec le boîtier mobile.

Les moyens de déplacement du boîtier mobile sont de préférence logés à l'intérieur du caisson qui peut comporter un orifice d'évacuation pour l'eau ou les salissures qui auraient pu pénétrer dans le caisson.

Les moyens de commande des actionneurs peuvent être logés dans le caisson.

Dans un premier mode de réalisation pratique, le boîtier d'actionneurs mobile est monté sur un dispositif de glissière en vue d'un déplacement en translation.

Dans un deuxième mode de réalisation, le boîtier mobile comprend un corps cylindrique capable de tourner autour de son axe, dans un sens ou dans les deux sens, les actionneurs étant montés à la périphérie dudit corps cylindrique.

Le corps cylindrique peut comprendre des pistes circulaires conductrices capables de coopérer avec des balais de contact pour l'alimentation en courant électrique des actionneurs. En variante, l'alimentation en courant électrique des actionneurs peut être faite par des fils directement reliés aux actionneurs. La rotation du boîtier se fait alors de préférence dans les deux sens par un mouvement alternatif par exemple sur un quart de tour ou un demi-tour, de façon à ne pas solliciter exagérément les fils électriques.

Dans un troisième mode de réalisation, le boîtier d'actionneurs est directement monté pivotant autour d'un axe.

Dans un quatrième mode de réalisation, le boîtier d'actionneurs mobile comprend un corps mobile en translation et en rotation, l'ensemble des actionneurs étant monté sur un côté dudit corps mobile. Ledit corps mobile comporte une excroissance sur le côté opposé, ladite excroissance ayant les mêmes dimensions que l'ensemble d'actionneurs de façon à pouvoir occuper la place des actionneurs dans la fenêtre de soufflage après rotation dudit corps mobile. Cela permet de ne pas perturber l'aérodynamique du véhicule lorsque les actionneurs de jets d'air synthétique ne sont pas en fonctionnement. Pour escamoter les actionneurs, le corps mobile est tout d'abord déplacé en translation de façon que l'ensemble d'actionneurs se trouve en dehors du plan de la zone de soufflage. Il est alors possible de procéder à la rotation du corps mobile, de préférence sur 180°, puis de déplacer à nouveau en translation ledit corps pour insérer dans la zone de soufflage, l'excroissance précitée qui est prévue diamétralement opposée à l'ensemble d'actionneurs. Il devient ainsi possible de rendre convenablement étanche la zone de soufflage, l'excroissance précitée venant coopérer avec le joint d'étanchéité prévu autour de la zone de soufflage. La rotation du corps mobile peut se faire toujours dans le même sens ce qui simplifie la commande et l'entraînement ou, en variante de façon alternée.

La présente invention sera mieux comprise à l'étude de quelques modes de réalisation pris à titre d'exemples non limitatifs, et illustrés par les dessins annexés, sur lesquels :
- la figure 1 illustre schématiquement un véhicule muni de plusieurs lignes d'orifices de jets d'air synthétique sur sa carrosserie ;
- la figure 2 illustre schématiquement un actionneur de jets d'air synthétique ;
- la figure 3 illustre schématiquement en perspective une portion d'un élément de carrosserie présentant une pluralité d'orifices alignés ;
- la figure 4 montre en coupe schématique un premier mode de réalisation d'un élément de carrosserie selon l'invention en position active ;
- la figure 5 illustre en coupe le même mode de réalisation dans une position inactive, les orifices d'expulsion des jets étant protégés ;
- la figure 6 montre également en coupe un deuxième mode de réalisation en position active ;
- la figure 7 illustre le deuxième mode de réalisation en position inactive ;
- la figure 8 illustre un troisième mode de réalisation en position active ;
- la figure 9 illustre le troisième mode de réalisation en position inactive ;
- la figure 10 illustre un quatrième mode de réalisation en position active ;
- la figure 11 illustre un quatrième mode de réalisation en position inactive ;
- la figure 12 illustre un cinquième mode de réalisation en position active ; et
- les figures 13, 14, 15 et 16 montrent les différentes étapes pour passer de la position active à la position inactive du cinquième mode de réalisation.

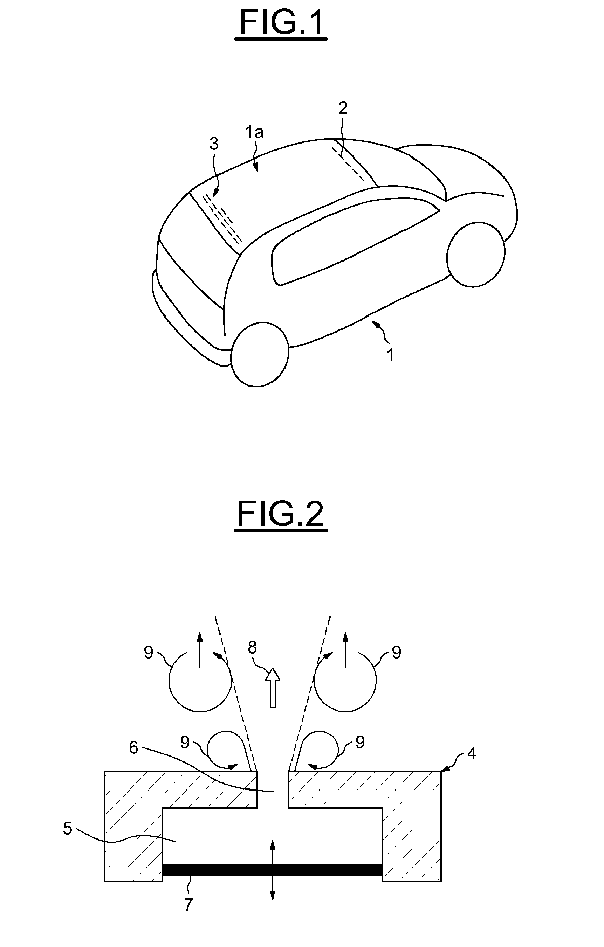

Tel qu'il est illustré sur la figure 1, un véhicule 1 équipé d'éléments de carrosserie selon la présente invention comporte sur sa paroi de toit 1a, au voisinage de la partie avant, une première ligne transversale 2 d'orifices sous forme de fentes de petites dimensions alignées les unes avec les autres, et permettant la projection de jets d'air synthétique à l'extérieur. Au voisinage de la partie arrière du toit, la paroi 1a du véhicule 1 présente également un ensemble de trois lignes 3 de fentes analogues pour la sortie de jets d'air synthétique destinés à améliorer l'aérodynamique du véhicule.

La figure 2 montre schématiquement la structure générale d'un actionneur de jets d'air synthétique. Un tel actionneur 4 comprend une cavité 5 munie d'un orifice 6 ouvert vers l'extérieur. La cavité 5 est délimitée à l'opposé de l'orifice 6 par une membrane 7 qui peut être mise en vibrations par des moyens non représentés sur la figure. Ces vibrations provoquent alternativement une aspiration d'air et une éjection d'air, cette éjection sous la forme d'un jet d'air synthétique étant symbolisée par la flèche 8 sur la figure 2. Le jet présente une forme sensiblement conique lorsque l'orifice 6 est circulaire et provoque des tourbillons 9 sur chacun de ses côtés, tourbillons qui sont capables de modifier les conditions d'écoulement de l'air sur la carrosserie qui présente des orifices ainsi définis.

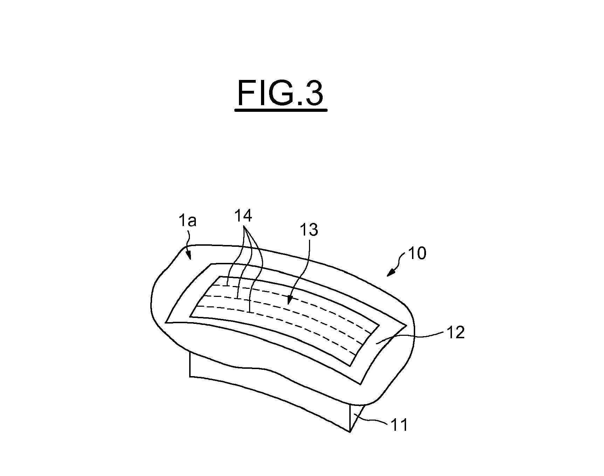

La figure 3 montre schématiquement un élément de carrosserie 10 comportant un caisson 11 et une partie de paroi pleine 12, qui entoure à la façon d'un cadre une zone de soufflage d'air 13, qui comporte trois lignes parallèles 14 d'orifices se présentant sous la forme de fentes de petites dimensions. L'élément de carrosserie 10 est monté sur une portion de la carrosserie 1a du véhicule. La figure 3 montre l'élément de carrosserie avec les différents orifices alignés 14 en position active. L'invention a pour objet de définir les moyens permettant d'escamoter ces orifices de façon à les protéger par exemple lorsque le véhicule est à l'arrêt, les actionneurs de jets synthétiques étant inactifs.

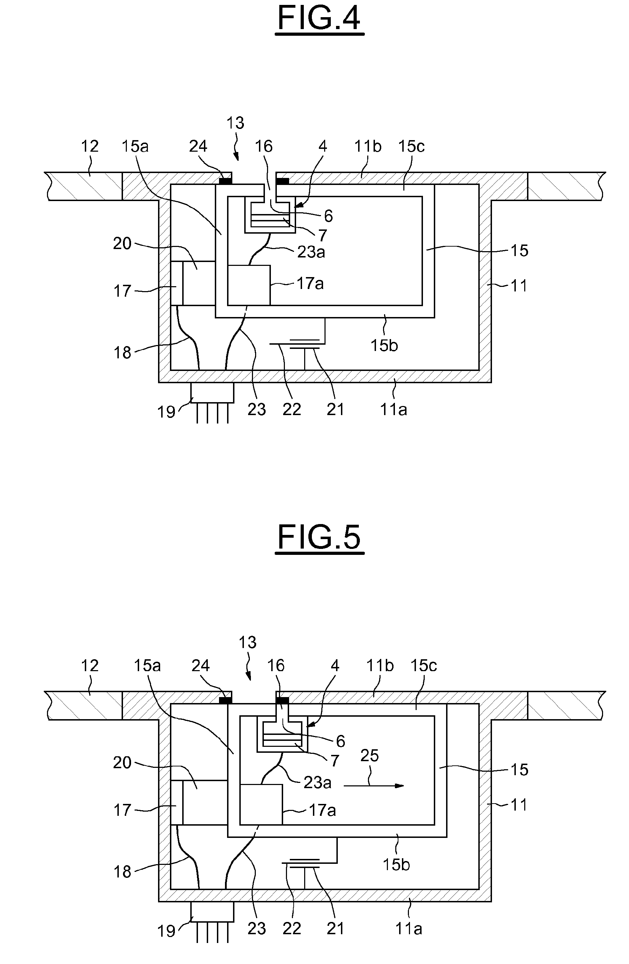

Les figures 4 et 5 illustrent un premier mode de réalisation des moyens permettant d'escamoter les actionneurs de jets synthétiques. On retrouve sur les figures 4 et 5 le caisson 11, la zone de soufflage d'air 13 et la partie de paroi pleine 12. A l'intérieur du caisson 11, est monté un boîtier d'actionneurs mobile 15 qui présente, comme le caisson 11, une section sensiblement rectangulaire tout en étant de dimensions inférieures à celles du caisson 11. L'ensemble des actionneurs 4 est monté à l'intérieur du boîtier mobile 15, de façon que les orifices 6 de tous les actionneurs se trouvent en face d'orifices correspondants 16 du boîtier mobile 15.

Un ensemble de commande 17 est également monté à l'intérieur du caisson 11 et alimenté en courant électrique par une connexion 18 reliée à un connecteur 19 extérieur au caisson 11. L'ensemble de commande 17 est capable de piloter un dispositif 20 de déplacement linéaire qui agit sur une paroi latérale 15a du boîtier d'actionneurs 15. Le déplacement en translation latérale du boîtier d'actionneurs 15 est guidé par un dispositif de glissière schématisé par la glissière 21. La glissière 21 est solidaire de la paroi de fond 11a du caisson 11 et peut coopérer avec une tige mobile 22 solidaire de la paroi de fond 15b du boîtier d'actionneurs 15.

L'alimentation électrique des actionneurs 4 se fait par un fil de connexion souple 23 relié au connecteur 19 et capable d'alimenter un bloc de commande électronique 17a relié aux actionneurs 4 par des connexions 23a.

Le pourtour de la zone de soufflage 13 est équipé d'un joint d'étanchéité 24 qui entre en contact de frottement avec la paroi supérieure 15c du boîtier d'actionneurs 15.

Le boîtier d'actionneurs 15 peut occuper deux positions. Dans une première position ou position active illustrée sur la figure 4, les orifices 6 et 16 sont dégagés et communiquent avec la zone de soufflage 13, de façon à projeter le jet d'air synthétique à l'extérieur du caisson 11 lors des vibrations de la membrane 7 de chacun des actionneurs 4.

Dans une deuxième position ou position inactive illustrée sur la figure 5, le boîtier d'actionneurs mobile 15 a été déplacé en translation dans le sens de la flèche 25, jusqu'à ce que les orifices 6 et 16 soient masqués par la partie de paroi 11b du caisson 11. La position des orifices 6 et 16 et par ce fait la position des actionneurs 4 à l'intérieur du boîtier d'actionneurs 15, sont telles vis-à-vis des dimensions de la zone de soufflage 13, que celle-ci est complètement obturée par la paroi supérieure 15c dans la position inactive illustrée sur la figure 5. Le joint d'étanchéité 24 restant toujours en contact avec la paroi 15c, on comprend que la zone de soufflage 13 soit parfaitement étanche aux intempéries et aux éventuelles projections venant de l'extérieur de la carrosserie du véhicule. De même, les orifices 6 des actionneurs 4 au même titre que l'orifice 16 du boîtier d'actionneurs 15, sont masqués et complètement escamotés en dehors de la zone de soufflage 13. Ces orifices sont ainsi protégés dans cette position inactive.

On notera que le boîtier d'actionneur 15 peut comporter une pluralité d'actionneurs 4 disposés de manière alignée, de façon que leurs orifices 6 se situent dans la zone de soufflage 13.

Le pilotage du passage de la position active déployée illustrée sur la figure 4 à la position inactive escamotée illustrée sur la figure 5, peut se faire en fonction d'informations fournies par un capteur non représenté sur les figures, de pression et/ou de vitesse et/ou de frottement et/ou de pluie implanté sur au moins une partie de la carrosserie du véhicule automobile. La vitesse de déplacement d'une position dans une autre peut être choisie arbitrairement. L'ensemble de commande 17 peut être choisi de façon suffisamment robuste pour supporter les efforts aérodynamiques exercés sur le boîtier d'actionneurs 15 par l'écoulement d'air externe de façon à permettre la mise en mouvement du boîtier mobile 15 dans le caisson 11 même lorsque le véhicule roule à grande vitesse.

L'ensemble compact formé par le caisson 11, qui contient le boîtier des actionneurs 15 et les différents actionneurs 4, peut être aisément intégré soit par l'intérieur soit par l'extérieur du véhicule, dans la carrosserie.

Le dispositif de déplacement 20 peut comprendre un actionneur linéaire de type piézoélectrique, électrodynamique ou comportant un piston.

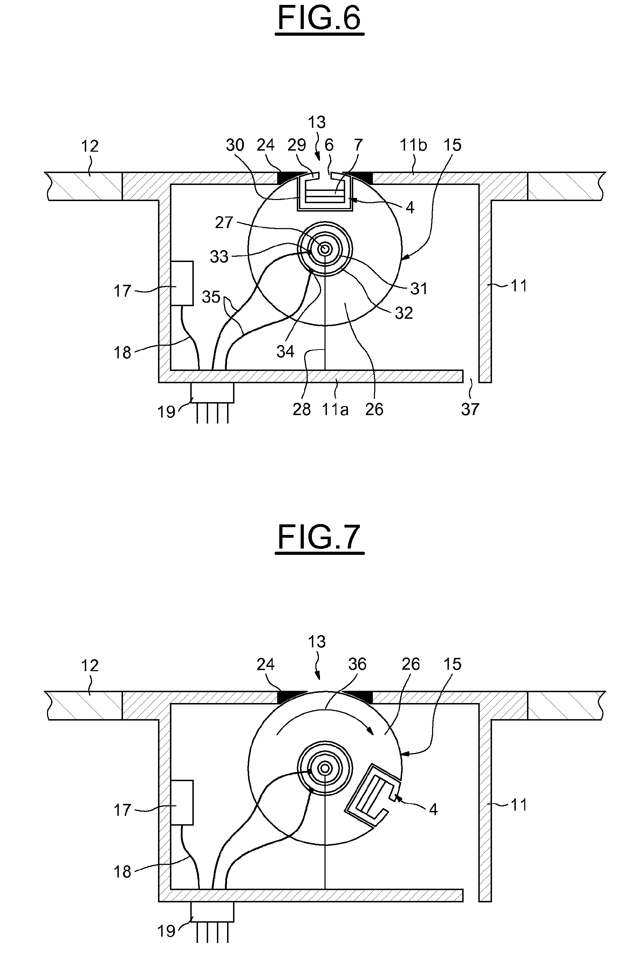

Le deuxième mode de réalisation, illustré sur les figures 6 et 7, sur lesquelles les pièces identiques portent les mêmes références, montre un boîtier d'actionneurs 15 comportant un corps cylindrique 26 capable de tourner autour d'un axe 27 monté fixe par un support 28 sur la paroi de fond 11a du caisson 11. Les actionneurs 4 sont montés à la périphérie du corps cylindrique 26, et présentent une paroi externe 29 de forme semi cylindrique de même rayon que celui du corps cylindrique 26, de façon à s'intégrer dans ce dernier. L'orifice 6 est pratiqué dans la paroi 29. Les actionneurs 4 sont montés dans des logements de forme correspondante 30 pratiqués dans le corps 26 au voisinage de sa périphérie.

Deux pistes circulaires conductrices de l'électricité, référencées 31 et 32, sont placées sur l'une des faces frontales d'extrémité du corps cylindrique 26 et peuvent coopérer avec des balais de contact 33, 34 reliés par des connexions 35 au connecteur 19, de façon à assurer l'alimentation électrique des actionneurs 4. Le joint d'étanchéité 24 présente une forme en biseau de façon à maintenir un contact d'étanchéité avec la surface cylindrique extérieure du corps cylindrique 26 tout en étant au même niveau que la paroi 12.

L'ensemble de commande 17 est capable de piloter un actionneur rotatif, par exemple un moteur électrique non représenté, qui provoque une rotation du boîtier d'actionneurs 15 autour de l'axe de rotation 27. Ainsi, le boîtier d'actionneurs mobile 15 peut passer de la position active illustrée sur la figure 6, dans laquelle les orifices 6 des actionneurs de jets d'air synthétique 4 débouchent à l'extérieur du caisson 11, et donc à l'extérieur de la carrosserie du véhicule, jusqu'à une position inactive illustrée sur la figure 7, dans laquelle le corps cylindrique 26 a tourné dans le sens de la flèche 36 de façon que ce soit la surface cylindrique du corps 26 qui remplace les actionneurs 4 dans la zone de soufflage 13. Comme dans le mode de réalisation précédent, les actionneurs 4 sont ainsi escamotés et parfaitement protégés, l'étanchéité du caisson 11 étant assurée par le joint d'étanchéité 24 en contact avec la surface extérieure du corps cylindrique 26 qui affleure à la surface de la paroi 11b du caisson 11. Dans ce mode de réalisation, contrairement à ce qui était le cas pour le mode de réalisation des figures 4 et 5, qui nécessitait un mouvement d'aller et de retour en translation du boîtier d'actionneurs mobile 15, le boîtier d'actionneurs rotatif 15 tourne toujours dans le même sens, ce qui est rendu possible par l'existence des pistes circulaires 31, 32 et des balais de contact 33, 34. En variante cependant, on pourrait prévoir un mouvement de rotation alterné.

Dans le mode de réalisation des figures 6 et 7, on a en outre prévu un orifice d'évacuation 37, au voisinage d'un des coins du caisson 11, à l'opposé de la zone de soufflage 13, de façon à permettre l'évacuation de l'eau qui aurait pu éventuellement pénétrer à l'intérieur du caisson 11. Un orifice d'évacuation du même type pourrait être prévu dans le mode de réalisation illustré sur les figures 4 et 5.

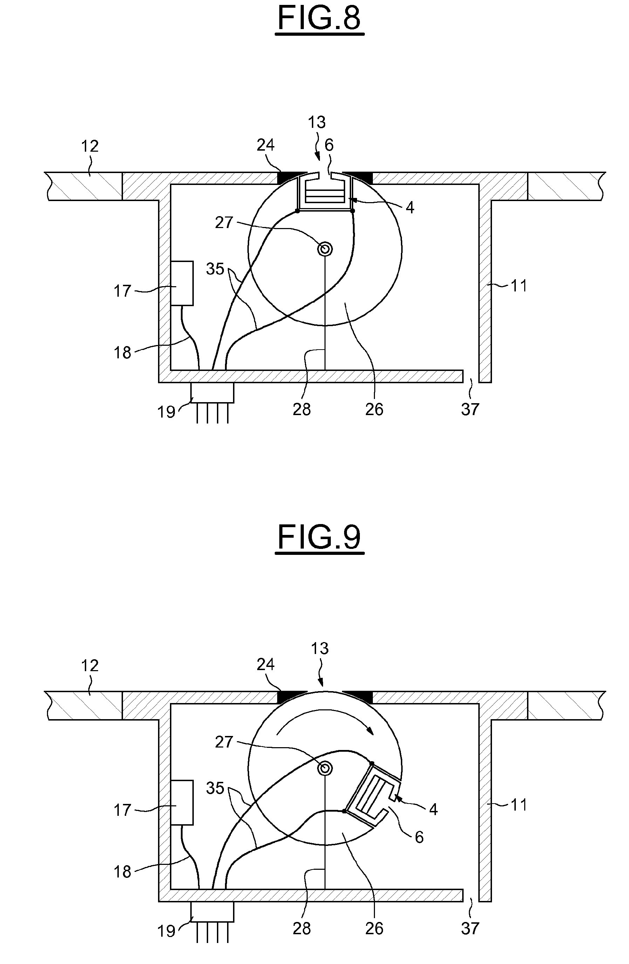

Le mode de réalisation illustré sur les figures 8 et 9, sur lequel les éléments identiques portent les mêmes références, se différencie du mode de réalisation illustré sur les figures 6 et 7 uniquement par le fait que l'alimentation électrique des actionneurs 4 n'est pas faite par l'intermédiaire de pistes circulaires mais au contraire par des fils souples de connexion 35 reliant directement le connecteur 19 aux actionneurs de jets d'air 4. Dans ce mode de réalisation, la rotation du corps cylindrique 26 se fait sur un angle inférieur à 180°, tout en étant généralement supérieur à 30°, ce qui est suffisant pour masquer l'orifice de la zone de soufflage 13. Le retour de la position inactive illustrée sur la figure 9 vers la position active illustrée sur la figure 8 se fait par un mouvement de rotation dans le sens inverse.

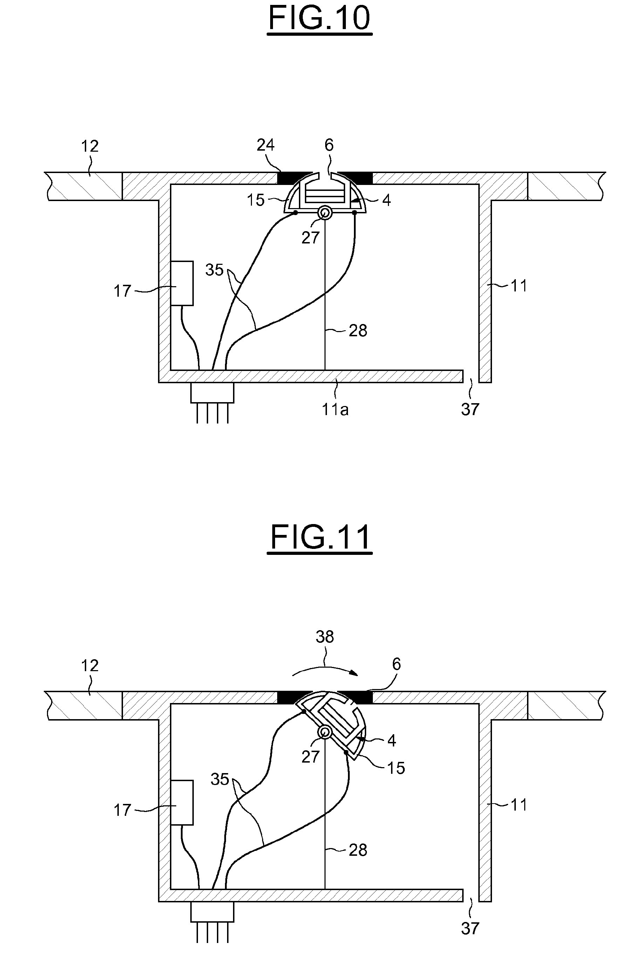

Dans le mode de réalisation illustré sur les figures 10 et 11, l'ensemble des actionneurs 4 est monté dans un boîtier 15 en forme de gouttière, lequel est directement monté pivotant autour de l'axe de rotation 27, solidaire par le support 28 de la paroi 11a du caisson 11. Le passage de la position active illustrée sur la figure 10 à la position inactive illustrée sur la figure 11, dans laquelle l'orifice 6 est masqué par le joint d'étanchéité 24, se fait par une rotation dans le sens de la flèche 38 de la figure 11. Comme dans les modes de réalisation illustrés sur les figures précédentes, un orifice d'évacuation 37 est prévu dans un des coins du caisson 11 de façon à permettre l'évacuation de l'eau ou de saletés ayant pu éventuellement pénétrer dans le caisson 11.

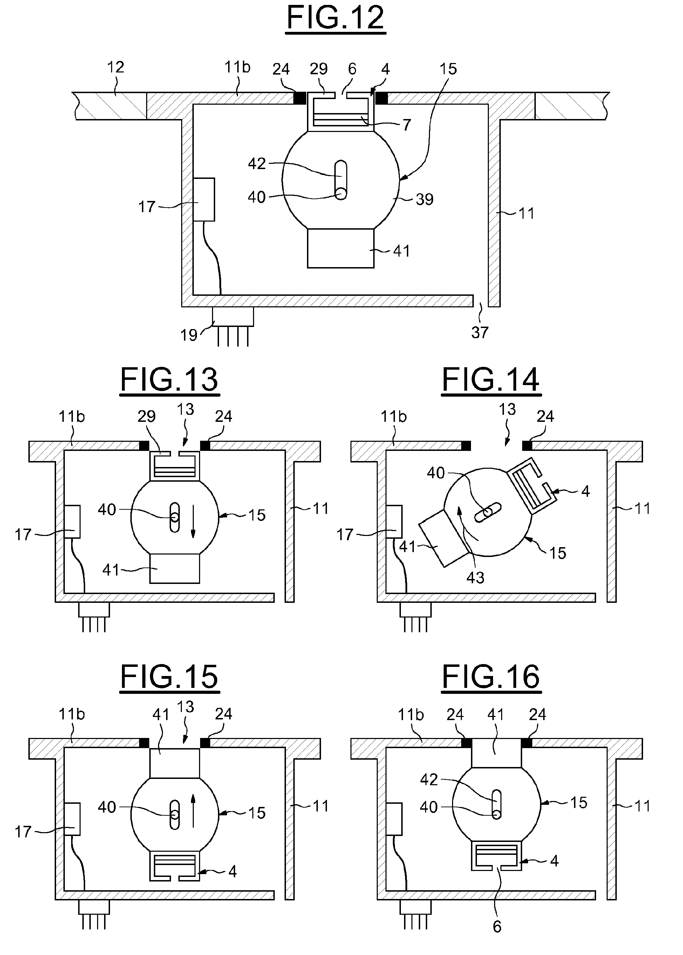

Le mode de réalisation illustré sur les figures 12 à 16, sur lesquelles les éléments identiques portent les mêmes références que sur les figures précédentes, montre un boîtier d'actionneurs 15 se présentant sous la forme d'un corps 39 mobile à la fois en translation et en rotation par rapport à un axe central 40. L'ensemble des actionneurs de jets d'air synthétique 4 est monté sur un côté du corps mobile 39 de forme générale cylindrique. A l'opposé des actionneurs 4, le corps 39 présente une excroissance 41 qui présente les mêmes dimensions et la même forme que les actionneurs 4. Dans la position illustrée sur la figure 12, qui est la position active, les orifices 6 des actionneurs 4 sont dégagés et peuvent projeter des jets d'air synthétique lors de la mise en vibration des membranes 7. Dans cette position, le joint d'étanchéité 24 entre en contact avec les actionneurs 4.

Le montage du corps mobile 39 sur l'axe fixe 40 se fait par une lumière oblongue 42, disposée selon l'axe qui passe à la fois par les actionneurs 4 et l'excroissance 41.

Pour passer de la position active illustrée sur la figure 12 à la position inactive illustrée sur la figure 16, l'ensemble de commande 17 pilote tout d'abord un actionneur linéaire non illustré sur la figure, pour faire descendre en translation le boîtier d'actionneurs 15 à l'intérieur du caisson 11 jusque dans la position illustrée sur la figure 13. Dans cette position, la lumière oblongue 42 s'est déplacée par rapport à l'axe fixe 40. La paroi externe supérieure 29 des actionneurs 4 a été abaissée au dessous du niveau de la paroi 11b tout en restant dans l'axe de la zone de soufflage 13. Il est alors possible de piloter un actionneur rotatif non illustré sur la figure, tel qu'un moteur électrique, de façon à faire subir une rotation au boîtier d'actionneurs 15 autour de l'axe 40, comme illustré sur la figure 14 dans le sens de la flèche 43, et ce jusqu'à ce que l'excroissance 41 se trouve alignée avec la zone de soufflage 13, comme illustré sur la figure 15, c'est-à-dire après une rotation de 180° du boîtier d'actionneurs 15 autour de l'axe fixe 40. Enfin, l'ensemble de commande 17 pilote à nouveau l'actionneur linéaire non représenté sur la figure, pour faire cette fois se déplacer en translation vers le haut le boîtier d'actionneurs 15 jusqu'à ce que l'excroissance 41 vienne s'engager entre les bords du joint d'étanchéité 24 en étant au même niveau que la paroi 11b. Dans cette position inactive illustrée sur la figure 16, les orifices 6 des actionneurs de jets synthétiques 4 sont parfaitement protégés à l'intérieur du caisson 11. L'excroissance 41 qui vient affleurer sur la surface extérieure de la paroi 11b permet de supprimer toute perturbation aérodynamique et empêche l'accumulation de salissures qui pourrait se produire autrement si un évidement subsistait dans la position escamotée.

Bien qu'un mouvement de rotation toujours dans le même sens ait été mentionné en relation avec les figures 12 à 16, on comprendra que le boîtier d'actionneurs puisse également être soumis à une rotation dans un sens puis dans l'autre, de façon réversible.

La présente invention permet de protéger des actionneurs de jets d'air synthétique en les escamotant à l'intérieur d'un caisson lui-même faisant partie d'un élément de carrosserie, facilement intégrable dans un véhicule automobile.

## Revendications

1. Elément de carrosserie de véhicule automobile comportant un caisson (11) avec une partie de paroi pleine entourant une zone de soufflage d'air (13) qui présente une ligne d'orifices de soufflage communiquant avec des actionneurs de jets d'air synthétique, lesdits actionneurs (4) comprenant une cavité munie d'un desdits orifices et présentant au moins une membrane (7) qui peut être soumise à des vibrations, **caractérisé par le fait qu'**il comprend un boîtier d'actionneurs mobile (15) à l'intérieur duquel sont logés les actionneurs (4) et des moyens de déplacement capables de déplacer le boîtier (15) entre une position active dans laquelle les orifices (6) des actionneurs (4) sont en regard de la zone de soufflage (13) et une position inactive dans laquelle les orifices (6) des actionneurs (4) sont en dehors de la zone de soufflage (13).

2. Elément de carrosserie selon la revendication 1, dans lequel l'ensemble des actionneurs (4) correspondant à la ligne d'orifices de soufflage sont montés dans le boîtier d'actionneurs mobile (15).

3. Elément de carrosserie selon les revendications 1 ou 2, comprenant un joint d'étanchéité (24) sur le pourtour de la zone de soufflage (13), ledit joint étant en contact avec le boîtier d'actionneurs mobile (15).

4. Elément de carrosserie selon l'une des revendications précédentes, dans lequel le boîtier d'actionneurs mobile (15) et les moyens de déplacement du boîtier mobile, sont logés dans le caisson (11), ledit caisson comportant de préférence un orifice d'évacuation (37).

5. Elément de carrosserie selon l'une des revendications précédentes, dans lequel les moyens de commande (17) des actionneurs (4) sont logés dans le caisson (11).

6. Elément de carrosserie selon l'une des revendications précédentes, dans lequel le boîtier d'actionneurs mobile (15) est monté sur un dispositif de glissière (21, 22) en vue d'un déplacement en translation.

7. Elément de carrosserie selon l'une des revendications 1 à 5, dans lequel le boîtier d'actionneurs mobile (15) comprend un corps cylindrique (26) capable de tourner autour de son axe, dans un sens ou dans les deux sens, les actionneurs (4) étant montés à la périphérie dudit corps cylindrique.

8. Elément de carrosserie selon la revendication 7, dans lequel le corps cylindrique (26) comprend des pistes circulaires conductrices (31, 32) capables de coopérer avec des balais de contact (33, 34) pour l'alimentation en courant électrique des actionneurs.

9. Elément de carrosserie selon la revendication 2, dans lequel le boîtier d'actionneurs (15) est directement monté pivotant autour d'un axe (27) en vue d'une rotation dans les deux sens, par exemple sur un quart de tour ou un demi-tour, l'alimentation en courant électrique des actionneurs se faisant par des fils électriques directement reliés aux actionneurs.

10. Elément de carrosserie selon l'une des revendications 2 à 5, dans lequel le boîtier d'actionneurs mobile (15) comprend un corps (39) mobile en translation et en rotation, l'ensemble des actionneurs étant monté sur un côté dudit corps mobile et ledit corps mobile (39) comportant une excroissance (41) sur le côté opposé, ladite excroissance (41) ayant les mêmes dimensions que l'ensemble des actionneurs (4) de façon à pouvoir occuper la place des actionneurs dans la zone de soufflage (13) après rotation dudit corps mobile (39).
